# EUROPÄISCHE PATENTANMELDUNG

(11) **EP 1 916 109 A2**
(43) Veröffentlichungstag der Anmeldung: **30.04.2008**
(21) Anmeldenummer: 07019684.5
(22) Anmeldetag: 09.10.2007
(51) Int. Cl.: B41F 31/00, B41F 31/14

(54) **Antriebsmechanik, insbesondere für einen Farbheber einer Druckmaschine**

(30) Priorität: 26.10.2006 DE 102006050443
(71) Anmelder: MAN Roland Druckmaschinen AG, 63075 Offenbach (DE)
(72) Erfinder: Jäger, Hans-Bernd, 36124 Eichenzell (DE); Reiniger, Markus, 61118 Bad Vilbel (DE)
(74) Vertreter: Stahl, Dietmar

(57) **Zusammenfassung**

Die Erfindung betrifft eine Antriebsmechanik, insbesondere Für eine Druckmaschine zur Bewerkstelligung der hin- und hergehenden Verlagerung einer Farbheberwalze (20) zwischen einer Duktorwalze (21) und einer Übertragwalze (22) zwischen der Duktorwalze und der Übertragwalze hin und herbewegt wird. Der Erfindung liegt die Aufgabe zugrunde, Lösungen zu schaffen durch welche insbesondere bei einem Heberfarbwerk einer Druckmaschine eine hin- und hergehende Bewegung eines Strukturbauteils, insbesondere der Heberwalze durch eine kompakte Mechanik in einer unter maschinendynamischen Gesichtspunkten vorteilhaften Weise bewerkstelligt werden kann. Diese Aufgabe wird erfindungsgemäß gelöst durch eine Antriebsmechanik zur Bewerkstelligung der hin- und hergehenden Verlagerung eines Strukturbauteils zwischen einer ersten Position (1) und einer zweiten Position (11), insbesondere einer Übertragwalze eines Farbwerks, mit einer Querführungseinrichtung, einer Lagerungseinrichtung zur Lagerung der Schwenkhebeleinrichtung derart, dass diese um eine Schwenkachse (X1) schwenkbar ist, und einem Schwenktrieb zur Generierung eines den Schwenkhebel (23) schwenkenden Kräftesystems, wobei sich diese Antriebsmechanik dadurch auszeichnet, dass der Schwenktrieb ein Linearhubmodul (1) und eine durch das Linearhubmodul entlang einer Schubachse (X2) verlagerbare Schrägflächenstruktur (3) umfasst, und dass das das Linearhubmodul derart in die Antriebsmechanik eingebunden ist, dass die Schubachse im wesentlichen parallel zur Schwenkachse verläuft. Dadurch wird es auf vorteilhafte Weise möglich, eine kompakte Antriebsmechanik zu schaffen, durch welche ein Strukturbauteil, wie insbesondere die Heberwalze einer Druckmaschine, mit hoher Systemsteifigkeit zwischen zwei Funktionspositionen verlagert werden kann.

## Beschreibung

Die Erfindung betrifft eine Antriebsmechanik, insbesondere Für eine Druckmaschine zur Bewerkstelligung der hin- und hergehenden Verlagerung einer Farbheberwalze zwischen einer Duktorwalze und einer Übertragwalze.

Aus DE 199 40 532 A1 ist eine Druckmaschine mit einem Heberfarbwerk bekannt. Bei diesem Heberfarbwerk ist die Heberwalze an einem Gelenkhebelpaar aufgehängt. Dieses Gelenkhebelpaar wird durch eine Kurvenscheibe angetrieben. Nach Maßgabe des Umfangsprofils der Kurvenscheibe wird das Gelenkhebelpaar geschwenkt und damit die an dem Schwenkhebelpaar beidseitig gelagerte Heberwalze in einer zur Rotationsachse der Heberwalze radialen Richtung verlagert. Die Kurvenscheibe wiederum kann derart angetrieben werden, dass deren Winkelgeschwindigkeit nach Maßgabe eines vorgegebenen zeitlichen Profils alterniert. Hierdurch wird es möglich sowohl über die Gestaltung des Umfangsprofils der Kurvenscheibe, als auch über die Drehung der Kurvenscheibe Einfluss auf das Geschwindigkeitsprofil zu nehmen gemäß welchem die Heberwalze zwischen der Duktorwalze und der Übertragwalze hin und herbewegt wird.

Der Erfindung liegt die Aufgabe zugrunde, Lösungen zu schaffen durch welche insbesondere bei einem Heberfarbwerk einer Druckmaschine eine hin- und hergehende Bewegung eines Strukturbauteils, insbesondere der Heberwalze durch eine kompakte Mechanik in einer unter maschinendynamischen Gesichtspunkten vorteilhaften Weise bewerkstelligt werden kann.

Diese Aufgabe wird erfindungsgemäß gelöst durch eine Antriebsmechanik zur Bewerkstelligung der hin- und hergehenden Verlagerung eines Strukturbauteils zwischen einer ersten Position und einer zweiten Position, insbesondere einer Übertragwalze eines Farbwerks, mit einer Querführungseinrichtung, einer Lagerungseinrichtung zur Lagerung der Schwenkhebeleinrichtung derart, dass diese um eine Schwenkachse schwenkbar ist, und einem Schwenktrieb zur Generierung eines den Schwenkhebel schwenkenden Kräftesystems, wobei sich diese Antriebsmechanik dadurch auszeichnet, dass der Schwenktrieb ein Linearhubmodul und eine durch das Linearhubmodul entlang einer Schubachse verlagerbare Schrägflächenstruktur umfasst, und dass das das Linearhubmodul derart in die Antriebsmechanik eingebunden ist, dass die Schubachse im wesentlichen parallel zur Schwenkachse verläuft.

Dadurch wird es auf vorteilhafte Weise möglich, eine kompakte Antriebsmechanik zu schaffen, durch welche ein Strukturbauteil, wie insbesondere die Heberwalze einer Druckmaschine, mit hoher Systemsteifigkeit zwischen zwei Funktionspositionen verlagert werden kann.

Gemäß einer besonders bevorzugten Ausführungsform der Erfindung ist die Schrägflächenstruktur als Kegelabschnitt ausgeführt, der hierbei derart angeordnet ist, dass dessen Kegelachse im Wesentlichen entlang der Schubachse ausgerichtet verläuft. Alternativ zu dieser Gestaltung der Schrägflächenstruktur ist es auch möglich, diese als Schraubenbahn, insbesondere in der Art einer Spiralnutstruktur zu realisieren. Der Abgriff der durch die Schrägflächenstruktur aufgebrachten Stellkräfte kann durch Gleit-Kontaktelemente oder vorzugsweise durch Wälzkörper erfolgen.

Das zur Generierung der Linearhubbewegung vorgesehene Linearhubmodul ist vorzugsweise als Pneumatik- oder Hydraulikzylinder ausgeführt. Auf Grundlage des erfindungsgemäßen Konzeptes ergibt eine besonders günstige, Belastung dieses Aktors. Alternativ hierzu ist es auch möglich, das Linearhubmodul als elektromechanische Einheit, insbesondere unter Rückgriffnahme auf Spindeltriebsysteme, zu realisieren.

Die Antriebsmechanik kann derart gestaltet sein, dass die Schubachse und die Schwenkachse aufeinanderliegen. Hierbei ist es möglich, die erfindungsgemäße Antriebsmechanik durch teilweise ineinandergesteckte Zylinder-, Hülsen- und Zapfenelemente zu realisieren.

Die Schrägflächenstruktur kann in vorteilhafter Weise unmittelbar in die zur Schwenkung des Schwenkhebels vorgesehene Schwenkwelle eingebunden sein. Alternativ hierzu ist es auch möglich, die Schrägflächenstruktur in eine Schiebehülse einzubinden, die gegenüber der Schwenkwelle axial verschiebbar ist.

Es ist möglich, die erfindungsgemäße Antriebsmechanik so zu gestalten, dass über diese ein Zwangsantrieb des Schwenkhebels erreicht wird. Alternativ hierzu ist es auch möglich, über die Antriebsmechanik Schwenkkräfte aufzubringen, die als solche einer den Schwenkhebel in eine vorgegebene Richtung vorspannenden Rückstell-, insbesondere Federkraft entgegenwirken.

Gemäß einer besonders bevorzugten Ausführungsform der Erfindung ist das Linearhubmodul derart ausgebildet, dass dieses einen ersten Abstützabschnitt und einen zweiten Abstützabschnitt aufweist, wobei über beide Abstützabschnitte die entsprechenden, Schrägflächenstrukturen betätigt werden und das Linearmodul weiterhin zwischen diesen Abstützabschnitten in Hubrichtung schwimmend gelagert ist. Dadurch wird auf vorteilhafte Weise sichergestellt, dass beide Abstützabschnitte im Wesentlichen mit den gleichen Axialkräften beaufschlagt werden.

Die erfindungsgemäße Antriebsmechanik wird gemäß einem besonderen Aspekt der vorliegenden Erfindung zum Antrieb eines Farbhebersystems verwendet. An dem Schwenkhebel kann unmittelbar ein entsprechender Endabschnitt einer Farbheberwalze drehbar gelagert werden.

Weitere Einzelheiten und Merkmale der Erfindung ergeben sich aus der nachfolgenden Beschreibung in Verbindung mit der Zeichnung. Es zeigt:
- **Figur 1**: eine Schemadarstellung zur Veranschaulichung des Aufbaus des Linearhubmoduls einer erfindungsgemäßen Antriebsmechanik,
- **Figur 2**: eine Prinzipdarstellung zur Veranschaulichung einer ersten Variante des Kraftabgriffs von der durch das Linearhubmodul axial verlagerten Schrägflächenstruktur,
- **Figur 3**: eine weitere Prinzipdarstellung zur Veranschaulichung einer Zwangsführungsvariante zur Bewerkstelligung des Kraftabgriffs von der Schrägflächenstruktur,
- **Figur 4**: eine weitere Variante, ebenfalls zur Bewerkstelligung eines ZwangsKraftabgriffs von der Schrägflächenstruktur,
- **Figur 5a**: eine Schnittdarstellung zur Veranschaulichung einer Spiralnutvariante zur Umwandlung des durch die Linearhubeinrichtung verursachten Linearhubs in eine Schwenkbewegung,
- **Figur 5b**: eine weitere Schnittdarstellung zur Veranschaulichung der Funktionsweise der Antriebsmechanik gemäß Figur 5a,
- **Figur 6**: eine perspektivische Schemadarstellung zur Veranschaulichung des Einsatzes der erfindungsgemäßen Antriebsmechanik bei einem Heber-Farbwerk einer Bogendruckmaschine.

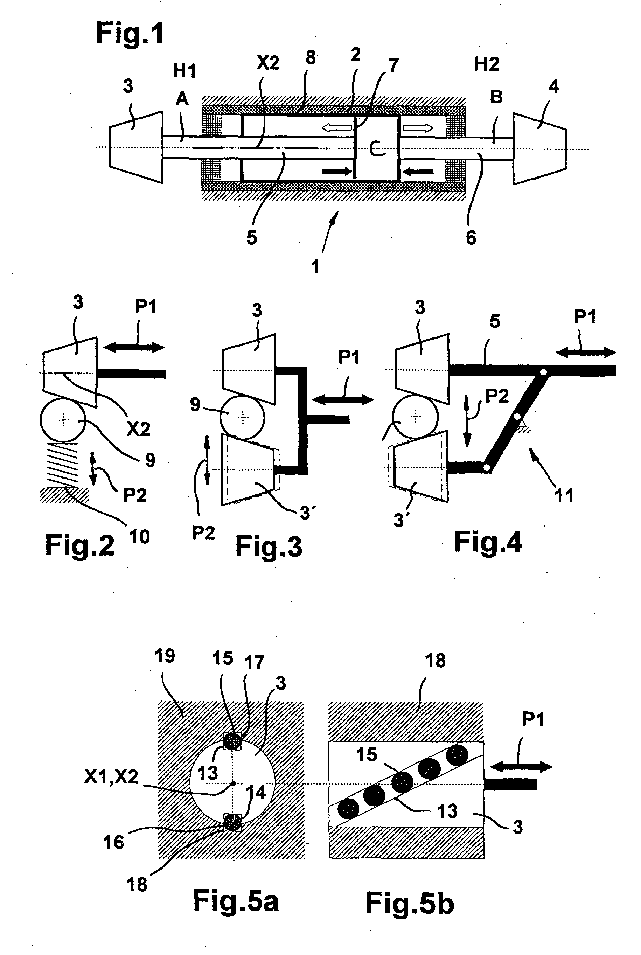

Die in Figur 1 dargestellte Antriebsmechanik dient als solche der Bewerkstelligung einer hin- und hergehenden Verlagerung eines hier nicht näher dargestellten Strukturbauteiles zwischen einer ersten Position und einer zweiten Position. Die hier dargestellte Antriebsmechanik umfasst ein Linearhubmodul 1, das einen ersten Abstützabschnitt A und einen zweiten Abstützabschnitt B aufweist und über diese Abstützabschnitte in einer Gehäuseeinrichtung 2 schwimmend gelagert ist. An den beiden Abstützabschnitten A, B sind Schrägflächenstrukturen 3, 4 angebracht, die als solche nach Maßgabe des Hubzustandes des Linearhubmoduls 1 entlang einer Schubachse X2 verlagerbar sind.

Bei dem hier gezeigten Ausführungsbeispiel ist das Linearhubmodul als Zylindereinrichtung ausgeführt, die eine erste Hubstange 5 und eine zweite Hubstange 6 umfasst. An die erste Hubstange 5 ist ein Kolben 7 angebunden. Dieser Kolben 7 läuft in einer Zylinderbuchse 8. Die zweite Kolbenstange 6 ist an die Zylinderbuchse 8 angebunden. Demnach bilden der Kolben 7, die Kolbenstange 5 und die auf diesem sitzende Schrägflächenstruktur eine erste Hubeinheit H1 und die Zylinderbuchse 8, die zweite Kolbenstange 6 und die zweite Schrägflächenstruktur 4 eine zweite Hubeinheit H2. Die beiden Hubeinheiten H1, H2 sind über die Zylinderbuchse 8 in dem Gehäuse 2 in Richtung der Schubachse X2 schwimmend gelagert. Hierdurch wird erreicht, dass die durch das Linearhubmodul 1 in Richtung der Schubachse X2 generierten Axialkräfte auf beiden Seiten des Antriebsmoduls 1 gleich groß sind. Hierdurch wird insbesondere erreicht, dass das Linearhubmodul 1 sich zwischen den mit den Schrägflächenstrukturen 3, 4 zusammenwirkenden Abgriffsorganen selbsttätig zentriert.

Die Beaufschlagung des als Zylindereinrichtung ausgeführten Linearhubmoduls mit einem entsprechenden Druckmittel, insbesondere Druckluft- oder einem Hydraulikfluid, erfolgt vorzugsweise durch Befüllung bzw. Ableitung des Fluides aus einem durch den Kolben 7 und die Zylinderbuchse 8 definierten Arbeitsraum C. Es ist möglich, in das Linearhubmodul Rückstelleinrichtungen, insbesondere in Form einer Spiralfeder einzubinden, durch welche das Linearhubmodul in einen bestimmten Ausgangszustand gedrängt wird, der erst durch Anlegen eines entsprechenden Druckes in der Arbeitskammer C verändert wird.

In Figur 2 ist stark vereinfacht ein Mechanik-Konzept zur Bewerkstelligung eines Querkraftabgriffs von der Schrägflächenstruktur 3 dargestellt. Entsprechend der durch das Pfeilsymbol P1 angedeuteten Verlagerung der Schrägflächenstruktur 3 in Richtung der Schubachse X2, wird relativ hierzu eine mit der Schrägflächenstrukturin Kraft-Abgriffskontakt stehende Abgriffsstruktur 9 in die durch das Pfeilsymbol P2 angedeutete Richtung verlagert. Bei dem hier gezeigten Ausführungsbeispiel ist das Kraftabgriffsorgan 9 durch eine Federeinrichtung 10 vorgespannt, sodass die Verlagerung des Abgriffsorgans 9 entgegen der Federkraft, die als solche durch die Federeinrichtung 10 aufgebracht wird, erfolgt. Das Linearhubmodul kann in die zu verlagernde Komponente, insbesondere Heberwalze integriert sein. Es kann auch separat zu der zu verlagernden Struktur angeordnet sein und die Schwenkhebeleinrichtung, oder eine anderweitige Querführungseinrichtung betätigen.

In Figur 3 ist ein Mechanik-Konzept dargestellt, durch welches eine Zwangskoppelung des Abgriffsorgans 9 mit der Schrägflächenstruktur 3 erreicht wird. Durch Verlagerung der Schrägflächenstruktur 3 sowie der zur Bewerkstelligung der Zwangskoppelung vorgesehenen Gegen-Schrägflächenstruktur 3' wird es ebenfalls möglich, die durch das Linearhubmodul 1 (Figur 1) veranlasste Verlagerung der Schrägflächenstruktur 3 in Richtung des Pfeilsymbols P1 in eine (Relativ-) Verlagerung des Abgriffsorgans 9 in die durch das Pfeilsymbol P2 angedeutete Verlagerungsrichtung zu ermöglichen.

In Figur 4 ist eine dritte Variante eines Mechanik-Konzeptes dargestellt, durch welches eine Zwangskoppelung des Abgriffsorgans 9 mit der Schrägflächenstruktur 3 erreicht werden kann. Bei dieser Variante wird ebenfalls eine Zwangskoppelung des Abgriffsorgans 9 mit der Schrägflächenstruktur 3 durch eine Gegen-Schrägflächenstruktur 3' erreicht. Die Gegen-Schrägflächenstruktur 3' wird über eine Hebelmechanik 11 angetrieben, die als solche mit einer der Verlagerung der Schrägflächenstruktur 3 dienenden Schubstange 5 gekoppelt ist.

Auch bei dieser Variante wird im Wege einer Zwangsführung eine entlang der durch das Pfeilsymbol P1 angedeuteten Hubrichtung erfolgende Verlagerung der Schrägflächenstruktur 3 in eine entlang der durch das Pfeilsymbol P2 angedeuteten Richtung erfolgende Systembewegung umgewandelt.

In den Figuren 5a und 5b ist in Form einer vereinfachten Schnittdarstellung ein weiteres Mechanik-Konzept veranschaulicht, durch welches eine Konversion einer durch das Linearhubmodul 1 (Figur 1) veranlassten, axiale Verlagerung von Komponenten der Antriebsmechanik, insbesondere der Schrägflächenstruktur 3 in eine Schwenkbewegung umgewandelt werden kann. Bei dem hier gezeigten Ausführungsbeispiel bildet die Schrägflächenstruktur 3 eine Spiralnut 13, 14 in welcher als solche Wälzkörper 15, 16 aufgenommen sind. Diese Wälzkörper 15, 16 wiederum stehen mit Mitnehmernuten 17, 18 in Eingriff. Durch axiale Verlagerung der Schrägfiächenstruktur 3 gegenüber dem die Nuten 17, 18 bereitstellenden Bauteil 19 wird das Bauteil 19 gegenüber der Schrägflächenstruktur 3 um eine Schwenkachse X1 geschwenkt. Diese Schwenkachse X1 ist bei dieser Variante deckungsgleich mit der zur Verlagerung der Schrägflächenstruktur 3 herangezogenen Schubachse X2.

In Figur 5b ist vereinfacht nochmals das Konzept zur Konversion des Linearhubs der Schrägflächenstruktur 3 in Hubrichtung P1 in eine Schwenkbewegung des Bauteils 19 dargestellt. In der Schrägflächenstruktur 3 ist die schraubenartig verlaufende Nut 13 ausgebildet. In dieser Nut 13 sitzen, wie bereits angegeben, kugelartig ausgeführten Wälzkörper 15, die als solche eine kinematische Koppelung der Schrägflächenstruktur 3 mit dem Bauteil 19 bewirken.

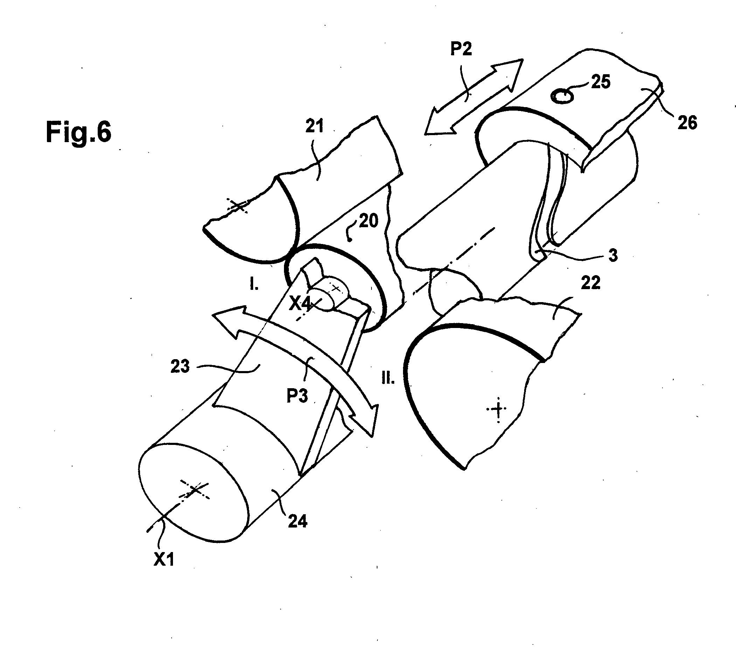

Wie aus Figur 6 ersichtlich eignet sich die vorangehend beschriebene Antriebsmechanik insbesondere zur Bewerkstelligung der hin- und hergehenden Verlagerung einer Heberwalze 20 zwischen einer ersten Position I, in welcher diese mit einer Duktorwalze 21 in Kontakt steht, und einer zweiten Position II, in welcher die Heberwalze 20 mit einer Übertragwalze 22 in Kontakt steht.

Die Heberwalze 20 ist im Bereich des hier erkennbaren, stirnseitigen Endabschnittes an einer Schwenkhebeleinrichtung 23 gelagert und, wie durch das Pfeilsymbol P3 angedeutet, zwischen den Stellungen I und II radial zur Achse X4 verlagerbar. Der Schwenkhebel 23 sitzt bei dem hier gezeigten Ausführungsbeispiel auf einer Schwenkwelle 24. In diese Schwenkwelle 24 wird auf Grundlage des vorangehend beschriebenen, kinematischen Koppelungskonzeptes ein Drehmoment eingekoppelt. Die Einkoppelung dieses Drehmomentes erfolgt, indem an der Schwenkwelle 24 eine Schrägflächenstruktur 3 ausgebildet ist, die mit einem Mitnehmerorgan 25 in Eingriff steht. Das Mitnehmerorgan 25 ist in eine Schiebehülse 26 eingebunden. Die Schiebehülse 26 ist über ein an sich schwimmend angeordnetes Linearhubmodul 1 (vgl. Figur 1) in einer zur Schwenkachse X1 parallelen Richtung P2 axial verlagerbar. Die Lagerung des hier nicht näher erkennbaren, anderen Endes der Heberwalze 20 kann durch eine ähnliche Mechanik erfolgen.

Die hier beispielhaft dargestellte Antriebsmechanik kann in eine als Wechselmodul ausgeführte Farbheberantriebseinheit eingebunden sein. Die Ansteuerung des Linearhubmoduls erfolgt vorzugsweise in Abstimmung mit dem Betrieb der Druckmaschine, insbesondere synchron zum Umlauf der bogenführenden Zylinder der Druckmaschine, oder unter einem bestimmten Takt- oder Übersetzungsverhältnis zum Maschinenbetrieb abgestimmt.

Bei der erfindungsgemäßen Antriebsmechanik umfasst der Linearantrieb einen Stator, der "schwimmend" in einem vorzugsweise stationär angeordneten Trägerrohr zwischen den Maschinenseiten gelagert ist. Als Antriebselement kommen alle, eine Linearbewegung ausführenden Aktoren in Frage, insbesondere Pneumatik-, Hydraulik-, und induktive Antriebsorgane sowie elektromechanische Antriebe; beispielsweise E-Motor + Kugelumlaufspindel.

Es ist möglich, das Linearhubmodul der erfindungsgemäßen Antriebsmechanik unmittelbar in eine zu schwenkende Walze zu integrieren. Die Umwandlung der durch das Linearhubmodul veranlassten Linear-Bewegung eines entsprechenden Getriebeelementes kann insbesondere durch Kegelstrukturen, die vorzugsweise mit einer Laufrolle zusammenwirken, in eine Schwenkbewegung umgewandelt werden. Der Kraftabgriff kann auf kraftschlüssigem Wege, oder durch Zwangsführungsstrukturen realisiert werden.

Weiterhin ist es auch möglich, die Konversion der Linearbewegung in eine Schwenkbewegung unter Einsatz von Schrägflächenmechanismen zu bewerkstelligen, die insbesondere Spiralnutstrukturen umfassen.

Der Kraftabgriff kann unter Rückgriffnahme auf Wälzkörper erfolgen. Auf Grundlage des erfindungsgemäßen Konzeptes wird es möglich, unter einem relativ geringen Bauraumbedarf eine Antriebsmechanik zur Verlagerung von Bauteilen zu realisieren. Durch das erfindungsgemäße Konzept wird es insbesondere auch möglich, die entsprechenden Mechanismen als hochsteife Mechanismen auszuführen, die sich insoweit durch eine hohe Präzision und Robustheit auszeichnen. Durch das Konzept der "schwimmenden" Lagerung des Linearhubmoduls ergeben sich gegenüber bisherigen Konstruktionskonzepten Vereinfachungen hinsichtlich der Leistungsdurchleitung bei einem Antrieb zwischen den Maschinenseiten.

Bei dem erfindungsgemäßen Konzept können die zwischen den einzelnen Getriebekomponenten wirksamen Kräfte vorteilhaft übertragen werden. Durch die "schwimmende" Lagerung des Linearhubmoduls ergibt sich eine gleichmäßige Einkoppelung der zur Schwenkung der Schwenkhebel erforderlichen Schwenkmomente.

Das erfindungsgemäße Konzept zur Bewerkstelligung einer Radialverlagerung eines Bauteils ist nicht auf den Einsatz bei Heberwalzen beschränkt. Auf Grundlage dieses Konzeptes ist es auch möglich, anderweitige An-/ und Abstellungen von Komponenten einer Druckmaschine, insbesondere von Walzen vorzunehmen.

## Patentansprüche

1. Antriebsmechanik zur Bewerkstelligung der hin- und hergehenden Verlagerung eines Strukturbauteils zwischen einer ersten Position (I) und einer zweiten Position (II), insbesondere einer Übertragwalze eines Farbwerks, mit:
- einer Schwenkhebeleinrichtung,
- einer Lagerungseinrichtung zur Lagerung der Schwenkhebeleinrichtung derart, dass diese um eine Schwenkachse (X1) schwenkbar ist, und
- einem Schwenktrieb zur Generierung eines den Schwenkhebel schwenkenden Kräftesystems,
- **dadurch gekennzeichnet, dass** der Schwenktrieb ein Linearhubmodul und eine durch das Linearhubmodul entlang einer Schubachse (X2) verlagerbare Schrägflächenstruktur umfasst, und dass das das Linearhubmodul derart in die Antriebsmechanik eingebunden ist, dass die Schubachse (X2) im wesentlichen parallel zur Schwenkachse (X1) verläuft.

2. Antriebsmechanik nach Anspruch 1, **dadurch gekennzeichnet, dass** die Schrägflächenstruktur als Kegelabschnitt ausgeführt ist.

3. Antriebsmechanik nach Anspruch 1 oder 2, **dadurch gekennzeichnet, dass** die Schrägflächenstruktur als Schraubenbahn-, insbesondere Spiralnutstruktur ausgeführt ist.

4. Antriebsmechanik nach wenigstens einem der Ansprüche 1 bis 3, **dadurch gekennzeichnet, dass** das Linearhubmodul als Pneumatikzylinder ausgeführt ist.

5. Antriebsmechanik nach wenigstens einem der Ansprüche 1 bis 3, **dadurch gekennzeichnet, dass** das Linearhubmodul als Hydraulikzylinder ausgeführt ist.

6. Antriebsmechanik nach wenigstens einem der Ansprüche 1 bis 3, **dadurch gekennzeichnet, dass** das Linearhubmodul als Spindeltrieb ausgeführt ist.

7. Antriebsmechanik nach wenigstens einem der Ansprüche 1 bis 6, **dadurch gekennzeichnet dass** die Schubachse (X2) und die Schwenkachse (X1) aufeinander liegen.

8. Antriebsmechanik nach wenigstens einem der Ansprüche 1 bis 7, **dadurch gekennzeichnet, dass** die Schrägflächenstruktur in eine Schwenkwelle eingebunden ist.

9. Antriebsmechanik nach wenigstens einem der Ansprüche 1 bis 8, **dadurch gekennzeichnet dass** die Schrägflächenstruktur in eine Schiebehülse eingebunden ist.

10. Antriebsmechanik nach wenigstens einem der Ansprüche 1 bis 9, **dadurch gekennzeichnet, dass** eine Wälzlagereinrichtung vorgesehen ist, zum Abgriff der über die Schrägflächenstruktur aufgebrachten Schwenkkraft unter Einbindung von Wälzkörpern.

11. Antriebsmechanik nach wenigstens einem der Ansprüche 1 bis 10, **dadurch gekennzeichnet, dass** über die Schrägflächenstruktur ein Zwangsantrieb des Schwenkhebels erfolgt.

12. Antriebsmechanik nach wenigstens einem der Ansprüche 1 bis 11, **dadurch gekennzeichnet, dass** diese Bestandteil eines Farbheberantriebssystems bildet.

13. Antriebsmechanik nach wenigstens einem der Ansprüche 1 bis 12, **dadurch gekennzeichnet, dass** das Strukturbauteil eine an dem Schwenkhebel um eine Farbheberwalzenachse drehbar gelagerte Farbheberwalze ist.

14. Antriebsmechanik nach wenigstens einem der Ansprüche 1 bis 13, **dadurch gekennzeichnet, dass** die Antriebsmechanik in ein Farbhebermodul eingebunden ist, das in einen zwischen den Seitenwangen eines Farbwerks definierten Zwischenraum einsetzbar ist.

15. Antriebsmechanik nach wenigstens einem der Ansprüche 1 bis 14, **dadurch gekennzeichnet, dass** das Linearhubmodul einen ersten Abstützabschnitt und einen zweiten Abstützabschnitt aufweist, und dass das Linearhubmodul über diese Abstützabschnitte in Hubrichtung schwimmend gelagert ist.
